# EUROPEAN PATENT APPLICATION

(11) **EP 4 671 339 A1**
(43) Date of publication of application: **31.12.2025**
(21) Application number: 24760046.3
(22) Date of filing: 29.01.2024
(51) Int. Cl.: C09J 201/00, C07D 239/62, C08J 5/18, C09J 7/30, C09J 133/04, C09J 133/10, C09K 3/10, G01N 1/28, G02B 21/34

(54) **COVER FILM**

(30) Priority: 21.02.2023 JP 2023025391
(71) Applicant: FUJIFILM Corporation, Tokyo 106-8620 (JP)
(72) Inventor: SUZUKI, Takato, Minamiashigara-shi, Kanagawa 250-0193 (JP)
(74) Representative: HGF
(86) International application number: PCT/JP2024/002590
(87) International publication number: WO 2024/176739

(57) **Abstract**

An object of the present invention is to provide a cover film having excellent adhesiveness to a glass substrate after a long-term storage of an enclosed body obtained by bonding the glass substrate to the cover film using an enclosing solvent. The cover film of the present invention is a cover film including a support and a polymer layer containing a polymer, in which a polarity element δP of a Hansen solubility parameter of the polymer layer is 0.0 to 5.1 MPa^{1/2} , a dissolution rate of the polymer layer in xylene is 0.01 to 0.25 g·m⁻²·s⁻¹, a viscosity of a xylene solution having a concentration of solid contents of 20% by mass, which is obtained by dissolving the polymer layer in xylene, at 25°C is 17 to 200 cP, and a breaking elongation of the polymer layer is 10% or more.

## Description

### BACKGROUND OF THE INVENTION

### 1. Field of the Invention

The present invention relates to a cover film.

### 2. Description of the Related Art

A method of automatically placing a cover film over a substrate on which a sample is placed and then bonding them using an automatic enclosing device to adhere (hereinafter, also referred to as "enclose") the cover film and the substrate, the cover film including a polymer layer on a support in advance, the substrate being a substrate (a glass slide or the like) onto which few drops of a solvent capable of swelling and/or dissolving the polymer layer (also referred to as "enclosing solvent"; for example, xylene or the like) are dropped, has been known. According to the method, for example, it is possible to produce a specimen for microscopic observation, in which the sample is fixed between the substrate and the cover film.

As the cover film described above, for example, US10988590B discloses a cover film including a support and a coating layer.

### SUMMARY OF THE INVENTION

As described above, after the sample is enclosed with the substrate, the cover film, and the enclosing solvent, it is required that the cover film does not peel off from the substrate even after long-term storage, from the viewpoint of observability. In particular, in a case where a glass substrate is used as the substrate, the above-described characteristic is required.

As a result of studying an enclosed body produced using the glass substrate and the cover film disclosed in US10988590B, the present inventor has found that the cover film is easily peeled off from the glass substrate after long-term storage, and there is room for improvement in adhesiveness.

Therefore, an object of the present invention is to provide a cover film having excellent adhesiveness to a glass substrate after a long-term storage of an enclosed body obtained by bonding the glass substrate to the cover film using an enclosing solvent.

As a result of conducting an extensive investigation to achieve the objects, the present inventors have found that the objects can be achieved by the following constitution.
[1] A cover film comprising:
   a support; and
   a polymer layer containing a polymer,
   in which a polarity element δP of a Hansen solubility parameter of the polymer layer is 0.0 to 5.1 MPa^{1/2},
   a dissolution rate of the polymer layer in xylene is 0.01 to 0.25 g·m⁻²·s⁻¹,
   a viscosity of a xylene solution having a concentration of solid contents of 20% by mass, which is obtained by dissolving the polymer layer in xylene, at 25°C is 17 to 200 cP, and
   a breaking elongation of the polymer layer is 10% or more.
[2] The cover film according to [1],
   in which a weight-average molecular weight of the polymer is 50,000 to 140,000.
[3] The cover film according to [1] or [2],
   in which the polymer contains at least two repeating units derived from a monomer selected from the group consisting of an acrylate monomer and a methacrylate monomer.
[4] The cover film according to any one of [1] to [3],
   in which the polymer contains a repeating unit derived from ethyl acrylate and at least one repeating unit derived from a monomer selected from the group consisting of methyl methacrylate, ethyl methacrylate, t-butyl methacrylate, i-butyl methacrylate, 2-methoxyethyl methacrylate, n-butyl methacrylate, and 2-ethylhexyl methacrylate, and
   a content of the repeating unit derived from ethyl acrylate is less than 25% by mass with respect to all repeating units of the polymer.
[5] The cover film according to any one of [1] to [4],
   in which the polymer contains a repeating unit derived from an alkyl methacrylate with an alkyl group having 3 or more carbon atoms.
[6] The cover film according to any one of [1] to [5],
   in which a thickness of the polymer layer is 5 to 30 µm.
[7] The cover film according to any one of [1] to [6],
   in which a weight-average molecular weight of the polymer is 90,000 to 120,000.
[8] The cover film according to any one of [1] to [7],
   in which the polymer layer further contains at least one compound selected from the group consisting of a silane coupling agent, a hydrolyzate of the silane coupling agent, and a hydrolysis condensate of the silane coupling agent.
[9] The cover film according to any one of [1] to [8],
   in which the cover film is used for covering a sample on a substrate.

According to the present invention, it is possible to provide a cover film having excellent adhesiveness to a glass substrate after a long-term storage of an enclosed body obtained by bonding the glass substrate to the cover film using an enclosing solvent.

### DESCRIPTION OF THE PREFERRED EMBODIMENTS

Hereinafter, the present invention will be described in detail.

The description of the configuration requirements described below is made on the basis of representative embodiments of the present invention, but it should not be construed that the present invention is limited to those embodiments.

In the present specification, the numerical value range indicated by "to" means a range including numerical values before and after "to" as a lower limit value and an upper limit value, respectively. In a range of numerical values described in stages in the present specification, the upper limit value or the lower limit value described in a certain range of numerical values may be replaced with an upper limit value or a lower limit value of the range of numerical values described in other stages. In addition, regarding the numerical range described in the present specification, an upper limit value or a lower limit value described in a numerical value may be replaced with a value described in Examples.

In the present specification, a combination of two or more preferred aspects is a more preferred aspect.

In the present specification, in a case where a plurality of substances corresponding to each component in a composition is present, the amount of each component in the composition or in the layer means the total amount of the plurality of substances present in the composition, unless otherwise specified.

In the present specification, "(meth)acryl" is a generic term including acryl and methacryl, and means "at least one of acryl or methacryl". Similarly, "(meth)acrylate" means "at least one of acrylate or methacrylate".

In the present specification, unless specified otherwise, a refractive index refers to a value which is measured using NAR-2T manufactured by Atago Co., Ltd. with respect to light having a wavelength of 550 nm.

In the present specification, a weight-average molecular weight (Mw) and a number-average molecular weight (Mn) are molecular weights in terms of polystyrene used as a standard substance, which are detected by using a solvent tetrahydrofuran (THF), a differential refractometer, and a gel permeation chromatography (GPC) analyzer using TSKgel GMHxL, TSKgel G4000HxL, TSKgel G2000HxL, and/or TSKgel Super HZM-N (all trade names manufactured by Tosoh Corporation) as columns, unless otherwise specified.

### <Cover film>

Hereinafter, the cover film according to the embodiment of the present invention will be described in detail.

The cover film according to the embodiment of the present invention includes a support and a polymer layer containing a polymer, in which a polarity element δP of a Hansen solubility parameter of the polymer layer is 0.0 to 5.1 MPa^{1/2}, a dissolution rate of the polymer layer in xylene is 0.01 to 0.25 g·m⁻²·s⁻¹, a viscosity of a xylene solution having a concentration of solid contents of 20% by mass, which is obtained by dissolving the polymer layer in xylene, at 25°C is 17 to 200 cP, and a breaking elongation of the polymer layer is 10% or more.

The reason why the cover film having the above-described configuration can achieve the object of the present invention is not necessarily clear, but the present inventors speculate as follows.

The mechanism by which the effect is obtained is not limited by the following supposition. In other words, even in a case where an effect is obtained by a mechanism other than the following, it is included in the scope of the present invention.

It is considered that, in order for the glass substrate and the cover film to exhibit excellent adhesiveness after long-term storage of an enclosed body, high affinity between the polymer layer and the glass substrate, the filling of the polymer without any voids during the enclosing, and the presence of a sufficient amount of the polymer to exhibit adhesiveness in an enclosing region on the glass substrate after the enclosing, and the like work advantageously.

In a case where the polarity element δP of the Hansen solubility parameter of the polymer layer is 0.0 to 5.1 MPa^{1/2}, a difference in polarity element δP of the Hansen solubility parameter between the polymer layer and the glass substrate is small, and thus the affinity is excellent.

In a case where the dissolution rate of the polymer layer in xylene is 0.01 g·m⁻²·s⁻¹ or more, the polymer layer can be dissolved during the enclosing, and thus the polymer can be easily filled without any voids; and in a case where the dissolution rate of the polymer layer in xylene is 0.25 g·m⁻²·s⁻¹ or less, the polymer can be maintained in the enclosing region without being eluted to the outside during the enclosing.

In addition, in a case where the viscosity of the xylene solution having a concentration of solid contents of 20% by mass, which is obtained by dissolving the polymer layer in xylene, at 25°C is 17 cP or more, the polymer can be maintained in the enclosing region without being extruded during the enclosing; and in a case where the viscosity is 200 cP or less, diffusivity of the polymer can be ensured, and thus the polymer can be easily filled without voids.

Furthermore, in a case where the breaking elongation of the polymer layer is 10% or more, the polymer layer has excellent followability during the enclosing, and thus the polymer is easily filled without voids.

Due to the above-described actions, it is considered that the cover film according to the embodiment of the present invention has excellent adhesiveness between the cover film and the glass substrate after the enclosed body obtained by bonding the cover film to the glass substrate using an enclosing solvent is stored for a long period of time.

Hereinafter, with regard to the cover film, the adhesiveness to the glass substrate after a long-term storage of the enclosed body obtained by bonding the cover film to the glass substrate using the enclosing solvent is also simply referred to as "adhesiveness after long-term storage", and the fact that the adhesiveness after long-term storage is more excellent is also referred to as "effect of the present invention is more excellent".

### [Support]

The cover film according to the embodiment of the present invention includes a support.

The support is not particularly limited, but from the viewpoint of suitability for microscopic observation, a transparent support is preferable. In the present specification, the "transparent" means that a transmittance with respect to visible light (wavelength: 380 to 780 nm) is 60% or more. The transmittance refers to a proportion of transmitted light to incidence light into the support.

### (Material of support)

The support is not particularly limited, and a known support can be used.

In particular, the support is preferably a support in which a content of a specific ester compound described later is 1% by mass or less with respect to the total mass of the support.

Examples of the material constituting the support include cellulose-based polymers such as triacetyl cellulose (TAC), diacetyl cellulose, cellulose acetate propionate, and cellulose acetate butyrate; polyester-based polymers such as an aliphatic polyester; polyolefin-based polymers such as a cycloolefin polymer (COP), polyethylene, and polypropylene; an acrylic resin; a polycarbonate (PC); and polystyrene. Among these, a cellulose-based polymer, an acrylic resin, or a cycloolefin polymer (COP) is preferable, and triacetyl cellulose (TAC) is more preferable.

In a case where the material constituting the support is a polymer, a weight-average molecular weight (Mw) thereof is, for example, 10,000 to 1,000,000, preferably 30,000 to 300,000.

In the support, the above-described material may be used alone or in combination of two or more kinds thereof.

A content of the above-described material in the support is preferably more than 50% by mass and more preferably 80% by mass or more with respect to the total mass of the support. The upper limit value thereof is not particularly limited, and may be 100% by mass.

Examples of a support containing cellulose include aspects described in paragraphs [0016] to [0023] of JP2015-227955A, the contents of which are incorporated herein by reference.

### (Specific ester compound)

In the support included in the cover film according to the embodiment of the present invention, it is preferable that the content of the specific ester compound is 1% by mass or less with respect to the total mass of the support. That is, it is preferable that the support does not contain the specific ester compound, or in a case of containing the specific ester compound, a content thereof is 1% by mass or less with respect to the total mass of the support.

The specific ester compound is a compound in which a pKa of at least one hydrolyzate (that is, compound having an oxo acid of an organic acid or an inorganic acid and a hydroxy group) among ester compounds obtained by a condensation reaction of an oxo acid of an organic acid or an inorganic acid and a hydroxy group-containing compound, is 2.5 or less.

In a case where the ester compound has a plurality of pKa's, it is sufficient that any one of the plurality of pKa's is 2.5 or less.

Examples of the specific ester compound include a phosphate ester compound, a phosphite ester compound, a sulfonate ester compound, and a nitrate ester compound.

Examples of the hydrolyzate of the specific ester compound, having a pKa of 2.5 or less, include phosphoric acid produced by hydrolysis of a phosphate ester compound, phosphorous acid produced by hydrolysis of a phosphite ester compound, sulfonic acid such as methanesulfonic acid and benzenesulfonic acid, produced by hydrolysis of a sulfonate ester compound, and nitric acid produced by hydrolysis of a nitrate ester compound.

Examples of the phosphate ester compound include triphenyl phosphate, biphenyl diphenyl phosphate, bisphenol A bis-(diphenyl phosphate), trimethyl phosphate, triethyl phosphate, diphenyl-2-methacryloyl ethyl phosphate, tricresyl phosphate, trixylyl phosphate, and cresyl diphenyl phosphate.

Examples of the phosphite ester compound include triphenyl phosphite, biphenyl diphenyl phosphite, bisphenol A bis-(diphenyl phosphite), trimethyl phosphite, triethyl phosphite, diphenyl-2-methacryloyl ethyl phosphite, tricresyl phosphite, trixylyl phosphite, and cresyl diphenyl phosphite.

Examples of the sulfonate ester compound include methyl benzenesulfonate, ethyl benzenesulfonate, methyl toluenesulfonate, and ethyl toluenesulfonate.

As the specific ester compound, the phosphate ester compound is preferable; triphenyl phosphate, biphenyl diphenyl phosphate, or tricresyl phosphate is more preferable; and triphenyl phosphate or biphenyl diphenyl phosphate is still more preferable.

The specific ester compound may be used alone, or two or more kinds thereof may be used in combination. In a case where the support contains two or more kinds of the specific ester compound, it is preferable that the total content of the specific ester compounds is 1% by mass or less with respect to the total mass of the support.

The content of the specific ester compound is preferably 0.6% by mass or less, and more preferably 0.4% by mass or less with respect to the total mass of the support. The lower limit thereof is not particularly limited and is 0% by mass, and it is particularly preferable that the support does not contain the specific ester compound.

The content of the specific ester compound contained in the support can be measured by the following measuring method.

For example, the type and content of each ester compound contained in the support are measured by a known measuring method such as a gas chromatography-mass spectrometry (GC/MS) method. From the structural formula of the ester compound, the pKa of a hydrolyzate produced by hydrolysis of each ester compound contained in the support is determined by calculation. In a case where a hydrolyzate having a pKa of 2.5 or less is present, the content of the ester compound generated from the hydrolyzate (in a case where two or more kinds of ester compounds are present, the total content thereof) is defined as the content of the specific ester compound. In a case where no hydrolyzate having a pKa of 2.5 or less is present, the support does not contain the specific ester compound.

### (Second ester compound)

The support may contain a second ester compound other than the specific ester compound.

The second ester compound is not particularly limited as long as it is an ester compound in which a pKa of the hydrolyzate is more than 2.5; and examples thereof include a carboxylic acid ester consisting of a carboxylic acid and a hydroxy group-containing compound.

Examples of the carboxylic acid ester compound include a sugar ester compound and an oligomer A described later.

### -Sugar ester compound-

The sugar ester compound is a compound in which hydrogen atoms in some or all of hydroxy groups contained in saccharides are substituted with acyl groups.

Examples of the saccharides include monosaccharides, disaccharides, and polysaccharides, and disaccharides are preferable.

Examples of the monosaccharides include pentose such as ribose, deoxyribose, arabinose, and xylose; hexose such as glucose, galactose, and fructose; triose; tetrose; and heptose.

Examples of the disaccharides include sucrose, lactose, maltose, trehalose, turanose, and cellobiose, and sucrose is preferable.

Examples of the polysaccharides include glycogen and starch.

The saccharides may have any of a chain and a cyclic structure. Examples of a ring structure of the saccharides include a furanose ring and a pyranose ring.

Examples of the above-described acyl group include aliphatic acyl groups such as a formyl group, an acetyl group, a propionyl group, a 2-methylpropionyl group, a 2,2-dimethylpropionyl group, and a 2-ethylhexanoyl group; and aromatic acyl groups such as a benzoyl group, a 1-naphthylcarbonyl group, a 2-naphthylcarbonyl group, and a 2-furylcarbonyl group.

The number of carbon atoms in the above-described acyl group is preferably 1 to 10.

As the sugar ester compound, for example, compounds described in paragraphs [0015] to [0056] of JP2012-031313A can be used.

### -Oligomer A-

The oligomer A is not particularly limited as long as it is a compound obtained by condensing a dicarboxylic acid and a diol compound, and examples thereof include a compound having a repeating unit represented by General Formula (1).

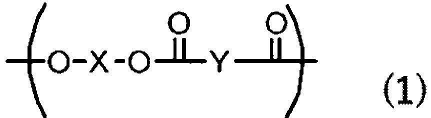

In General Formula (1), X and Y represent a divalent linking group.

Examples of X include an alkylene group having 2 to 20 carbon atoms, a polyoxyalkylene group, an alkenylene group, a phenylene group, a naphthylene group, and a divalent aromatic heterocyclic group, each of which may have a substituent. The above-described alkylene group and an alkylene group in the alkenylene group and the polyoxyalkylene group may have an alicyclic ring structure.

Examples of Y include an alkylene group having 2 to 20 carbon atoms, a polyoxyalkylene group, an alkenylene group, a phenylene group, a naphthylene group, and a divalent aromatic heterocyclic group, each of which may have a substituent. The above-described alkylene group and an alkylene group in the alkenylene group and the polyoxyalkylene group may have an alicyclic ring structure.

The divalent linking group represented by X and Y may include an atom other than a carbon atom, such as an oxygen atom and a nitrogen atom.

In addition, in a case where the oligomer A has a plurality of repeating units represented by General Formula (1), X's and Y's may be the same or different from each other.

In the repeating unit represented by General Formula (1), it is preferable that X represents a linear or branched divalent linking group having 2 to 10 carbon atoms, and Y represents a divalent linking group having 3 to 12 carbon atoms including an alicyclic ring structure of a 3- to 6-membered ring. The above-described alicyclic ring structure is more preferably a 5-membered ring or a 6-membered ring.

As the oligomer A, a compound containing a repeating unit represented by General Formula (1A) and having a sealed terminal is preferable.

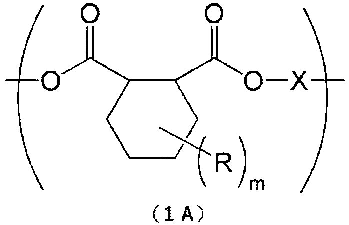

In General Formula (1A), X represents a linear or branched divalent linking group having 2 to 10 carbon atoms, R represents an alkyl group having 1 to 8 carbon atoms, an alkenyl group having 2 to 8 carbon atoms, an alkynyl group having 2 to 8 carbon atoms, or an aryl group having 6 carbon atoms, and m represents an integer of 0 to 4.

X represents a linear or branched divalent linking group having 2 to 10 carbon atoms.

X is preferably a linear or branched divalent linking group having 2 to 6 carbon atoms, and more preferably a linear or branched divalent linking group having 2 to 4 carbon atoms.

Examples of the linear or branched divalent linking group having 2 to 10 carbon atoms include an alkylene group (preferably having 2 to 10 carbon atoms, more preferably having 2 to 6 carbon atoms, and still more preferably having 2 to 4 carbon atoms), an alkynylene group (preferably having 2 to 10 carbon atoms, more preferably having 2 to 6 carbon atoms, and still more preferably having 2 to 4 carbon atoms), and the above-described alkylene group and the above-described alkynylene group, each of which has a heteroatom (for example, an oxygen atom or a nitrogen atom).

The linear or branched divalent linking group having 2 to 10 carbon atoms may have a substituent.

Examples of the above-described substituent include an alkyl group, an alkoxy group, a hydroxy group, a carboxyl group, and a group formed by a combination thereof.

R represents an alkyl group having 1 to 8 carbon atoms, an alkenyl group having 2 to 8 carbon atoms, an alkynyl group having 2 to 8 carbon atoms, or an aryl group having 6 carbon atoms.

Examples of the alkyl group having 1 to 8 carbon atoms include a methyl group, an ethyl group, a propyl group, a butyl group, an isobutyl group, a pentyl group, a hexyl group, an octyl group, and a 2-ethylhexyl group, and an alkyl group having 1 to 4 is preferable and a methyl group or an ethyl group is more preferable.

Examples of the alkenyl group having 2 to 8 carbon atoms include an ethenyl group, a 1-methylethenyl group, a 1-propenyl group, a 2-propenyl group, a 2-methyl-1-propenyl group, a 2-methyl-2-propenyl group, and a 2-methylenebutyl group.

Examples of the alkynyl group having 2 to 8 carbon atoms include an ethynyl group, a 1-methylethynyl group, a 1-propyne group, a 2-propyne group, a 2-methyl-1-propyne group, a 2-methyl-2-propyne group, and a 2-methylenebutyne group.

Examples of the aryl group having 6 carbon atoms include a phenyl group and a 4-methylphenyl group.

The group represented by R may have a substituent. Examples of the above-described substituent include the substituents that can be included in X.

The number of carbon atoms in the group represented by R does not include the number of carbon atoms in the substituent that can be included in the group represented by R. For example, an aryl group having 6 carbon atoms includes a phenyl group and a 4-methylphenyl group.

R may form a ring structure. Examples of the above-described ring structure include a cyclohexyl group, a cyclooctyl group, a boronyl group, an isoboronyl group, and a norbornyl group.

m represents an integer of 0 to 4.

m is preferably an integer of 1 to 4, more preferably 1 or 2, and still more preferably 1 from the viewpoint of reactivity and supply of the raw material.

The compound containing a repeating unit represented by General Formula (1A) preferably has a terminal structure obtained by reacting a terminal with a monohydric alcohol (or a derivative of the monohydric alcohol, which is a compound capable of forming an ester bond with a carboxy group of the terminal of the polyester) or a monocarboxylic acid (or a derivative of the monocarboxylic acid, which is a compound capable of forming an ester bond with a hydroxy group of the terminal of the polyester).

For example, the compound containing the repeating unit represented by General Formula (1A), having a carboxy group at a terminal, can be reacted with a monoalcohol to seal the terminal with a monoalcohol residue. In addition, the polyester having a hydroxy group at a terminal can be reacted with a monocarboxylic acid to seal the terminal with a monocarboxylic acid residue. The residue represents a partial structure of the above-described polyester, which has characteristics of a monomer forming the above-described polyester. For example, a monocarboxylic acid residue formed from a monocarboxylic acid R-COOH is R-CO-, and a monohydric alcohol residue formed from a monohydric alcohol R-OH is R-O-.

The terminal of the compound containing the repeating unit represented by General Formula (1A) is preferably sealed with an acyl group, and more preferably has a terminal structure obtained by reacting a hydroxy group at the terminal with a monocarboxylic acid. The above-described acyl group may be linear, branched, or cyclic, but it is preferable that the acyl group does not have any of an aromatic ring or a heterocyclic ring. The above-described acyl group is preferably a linear or branched aliphatic acyl group having 2 to 4 carbon atoms or an alicyclic acyl group having 4 to 12 carbon atoms, more preferably a linear aliphatic acyl group having 2 or 3 carbon atoms or an alicyclic acyl group having 4 to 7 carbon atoms, and still more preferably a linear aliphatic acyl group having 2 carbon atoms or an alicyclic acyl group having 7 carbon atoms.

Examples of the compound containing the repeating unit represented by General Formula (1A) include those described in paragraphs [0024] to [0035] of JP2015-227955A, the contents of which are incorporated herein by reference.

The support may contain other second ester compound in addition to the sugar ester compound and the oligomer A.

Examples of the second ester compound include adipic acid diesters such as dioctyl adipate, dibutyl adipate, and diisobutyl adipate; sebacic acid diesters such as dioctyl sebacate; phthalic acid diesters such as dimethyl phthalate, diethyl phthalate, dibutyl phthalate, dipentyl phthalate, dihexyl phthalate, and dicyclohexyl phthalate; tris(2-ethylhexyl) trimellitate; dibutyl maleate; and glycerin triacetate.

In addition, for example, compounds described in paragraphs [0041] to [0048] of JP2015-227955A can also be used.

In a case where the support contains the second ester compound, the second ester compound may be used alone or in combination of two or more kinds thereof.

In a case where the support contains the second ester compound, a content of the second ester compound is preferably 1% to 30% by mass and more preferably 5% to 15% by mass with respect to the total mass of the support.

The support may contain an additive other than the specific ester compound and the second ester compound. Examples of other additives include a compound represented by General Formula (2).

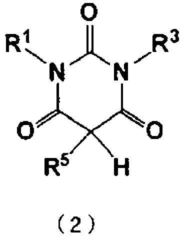

In General Formula (2), R¹, R³, and R⁵ each independently represent a hydrogen atom, an alkyl group, a cycloalkyl group, an alkenyl group, or an aromatic group. These alkyl group, cycloalkyl group, alkenyl group, and aromatic group may have a substituent. However, any one of R¹, R³, or R⁵ is an alkyl group substituted with a group having a ring structure or a cycloalkyl group, and the total number of ring structures present in R¹, R³, and R⁵ is 3 or more.

The number of carbon atoms in the above-described alkyl group of R¹, R³, and R⁵ is preferably 1 to 20, more preferably 1 to 10, still more preferably 1 to 5, and particularly preferably 1 to 3.

However, in a case of the alkyl group substituted with a group having a ring structure, the number of carbon atoms thereof is preferably 7 to 20, more preferably 7 to 12, and still more preferably 7 to 10. The ring structure in the alkyl group having a ring structure may be an aromatic ring (including an aromatic heterocyclic ring) or an aliphatic ring, and is preferably an aromatic hydrocarbon ring or an aliphatic ring.

The number of carbon atoms in the above-described cycloalkyl group of R¹, R³, and R⁵ is preferably 3 to 20, more preferably 3 to 10, still more preferably 4 to 8, and particularly preferably 5 or 6.

The number of carbon atoms in the above-described alkenyl group of R¹, R³, and R⁵ is preferably 2 to 20, more preferably 2 to 10, and still more preferably 2 to 5.

The above-described aromatic group of R¹, R³, and R⁵ may be an aromatic hydrocarbon group or an aromatic heterocyclic group, but is preferably an aromatic hydrocarbon group. The number of carbon atoms in the aromatic group is preferably 6 to 20, more preferably 6 to 16, and still more preferably 6 to 12. As the aromatic group, in particular, as the aromatic hydrocarbon group, a phenyl group or a naphthyl group is preferable, and a phenyl group is more preferable.

The above-described groups of R¹, R³, and R⁵ may have a substituent. The above-described substituent may be further substituted with a substituent. The above-described substituent is not particularly limited, and examples thereof include substituents described in paragraphs [0052] and [0053] of JP2015-227955A.

The substituent which may be included in each group of R¹, R³, and R⁵ is preferably an alkyl group, an aryl group, an alkoxy group, an alkylthio group, an alkylsulfonyl group, a halogen atom, or an acyl group, more preferably an alkyl group, an aryl group, an alkoxy group, or an acyl group, and still more preferably an alkyl group or an alkoxy group.

In the compound represented by General Formula (2), any one of R¹, R³, or R⁵ is an alkyl group substituted with a group having a ring structure or a cycloalkyl group, and it is preferable that any one thereof is an alkyl group substituted with a group having a ring structure. Among these, it is preferable that R⁵ is an alkyl group substituted with a group having a ring structure or a cycloalkyl group. Here, the ring of the group having a ring structure is preferably a benzene ring, a naphthalene ring, a cyclopentane ring, a cyclohexane ring, or a nitrogen-containing aromatic heterocyclic ring (for example, a pyrrole ring, a pyrazole ring, an imidazole ring, an oxazole ring, a thiazole ring, a pyridine ring, an indole ring, or an isoindole ring).

In addition, in the compound represented by General Formula (2), it is preferable that at least two of R¹, R³, or R⁵ are an alkyl group having a ring structure as a substituent or a cycloalkyl group. Furthermore, it is preferable that R¹ and R³ each independently represent an alkyl group which may have a substituent, an aromatic group which may have a substituent, or a cycloalkyl group.

In the compound represented by General Formula (2), it is still more preferable that the total number of ring structures present in the substituents of R¹, R³, and R⁵ is 4 or less.

R⁵ is preferably an alkyl group which may be substituted with a group having a ring structure or an acyl group, or a cycloalkyl group; more preferably an alkyl group substituted with an aryl group, an alkyl group substituted with an acyl group (preferably an alkyl group substituted with an acyl group or an aryl group), or a cycloalkyl group; and still more preferably an alkyl group substituted with an aryl group or a cycloalkyl group. Hereinafter, the above-described preferred alkyl group and cycloalkyl group in R⁵ are as described above.

Among the compounds represented by General Formula (2), preferred compounds are as follows.
· Compound in which any one of R¹, R³, or R⁵ is an alkyl group substituted with an aromatic ring

The alkyl group substituted with an aromatic ring is preferably an alkyl group substituted with one or two aryl groups (in a case where two aryl groups are substituted, it is preferable that the two aryl groups are substituted to the same carbon atom). Furthermore, an alkyl group substituted with an aryl group and an acyl group (preferably, with an aryloyl group) is also preferable.
· Compound in which any one of R¹, R³, or R⁵ is a group including a cycloalkyl group (preferably, a cycloalkyl group)

In the compound represented by General Formula (2), it is more preferable that R¹, R³, and R⁵ each have one or more ring structures, and it is still more preferable that R¹, R³, and R⁵ each have one ring structure.

A molecular weight of the compound represented by General Formula (2) is preferably 250 to 1,200, more preferably 300 to 800, and still more preferably 350 to 600.

With regard to specific examples and synthesis method of the compound represented by General Formula (2), reference can be made to contents of paragraphs [0041] to [0078] of JP2015-227955A, the contents of which are incorporated herein by reference.

The kind and content of the component contained in the support (for example, the material and the additive of the support described above) can be specified by measuring the kind of the component contained in the support and the content of each component by a known measuring method such as gas chromatography-mass spectrometry (GC/MS).

### (Properties of support)

A thickness of the support is not particularly limited, but is preferably 50 to 250 µm, more preferably 50 to 150 µm, and still more preferably 100 to 150 µm.

A refractive index of the support is not particularly limited, and may be, for example, 1.44 to 1.60. From the viewpoint of visibility in a case where the support is laminated with the glass substrate, the refractive index of the support is preferably 1.46 to 1.56, which is close to that of a glass slide (refractive index: 1.52 to 1.56).

From the viewpoint of suitability for observation with a polarization microscope, an in-plane retardation of the support is preferably 1,000 nm or less, more preferably 600 nm or less, still more preferably 400 nm or less, and particularly preferably 200 nm or less. The lower limit of the in-plane retardation is 0 nm.

From the viewpoint of being suitable for observation with a polarization microscope, a thickness-direction retardation of the support is preferably -300 to 300 nm, more preferably -100 to 100 nm, and still more preferably -50 to 50 nm.

In the present specification, an in-plane retardation Re(λ) at a wavelength λ and a thickness-direction retardation Rth(λ) at a wavelength λ refer to values measured by the following methods, respectively. In addition, in a case where a wavelength is not particularly described, λ is 590 nm.

Re(λ) and Rth(λ) can be calculated from measured values of an average refractive index ((nx + ny + nz)/3) and a film thickness (d (µm)) measured at a wavelength λ using a retardation measuring device (KOBRA-21WR, manufactured by Oji Scientific Instruments).

On the surface of the support, an undercoat layer which is known in the field of photosensitive materials may be provided. A surface treatment such as ultraviolet irradiation, corona discharge, or glow discharge may be performed on the support.

The support can be manufactured from the above-described raw materials according to a known method such as solution film formation and melt film formation.

### [Polymer layer]

The cover film according to the embodiment of the present invention includes a polymer layer containing a polymer, in which a polarity element δP of a Hansen solubility parameter of the polymer layer is 0.0 to 5.1 MPa^{1/2}, a dissolution rate of the polymer layer in xylene is 0.01 to 0.25 g·m⁻²·s⁻¹, a viscosity of a xylene solution having a concentration of solid contents of 20% by mass, which is obtained by dissolving the polymer layer in xylene, at 25°C is 17 to 200 cP, and a breaking elongation of the polymer layer is 10% or more.

Hereinafter, each component which can be contained in the polymer layer will be described, and then the requirements that the polymer layer satisfies will be described.

### (Polymer)

The polymer layer contains a polymer.

The polymer is not particularly limited as long as it is a polymer capable of forming the polymer layer satisfying the above-described predetermined requirements.

The polymer is preferably a polymer which is swollen in an organic solvent used as an enclosing solvent in an automatic enclosing device, and more preferably a polymer which is dissolved in the organic solvent. In a case where the polymer is swollen in the organic solvent or is dissolved in the organic solvent, the cover film and the substrate are bonded to each other, and the sample can be enclosed.

Examples of the organic solvent used in the automatic enclosing device include any single solvent of xylene, toluene, mesitylene (1,3,5-trimethylbenzene), pseudocumene (1,2,4-trimethylbenzene), hemimellitene (1,2,3-trimethylbenzene), durene (1,2,4,5-tetramethylbenzene), anisole, ethyl propionate, amyl acetate, propyl acetate, isopropyl acetate, butyl acetate, methyl lactate, dimethyl carbonate, 1-butanol, 1-propanol, 2-butanol, 1-pentanol, 2-pentanol, isoamyl alcohol, t-amyl alcohol, neopentyl alcohol, cyclopentanol, 2-hexanol, 4-methyl-2-pentanol, methyl isobutyl ketone, acetylacetone, cyclopentanone, n-butyl ether, 1,2-dimethoxyethane, dioxane, cyclopentyl methyl ether, 1-methoxy-2-propanol, 2-methoxy-1-methylethyl acetate, ethyl acetate, methyl acetate, acetone, and methyl ethyl ketone, and a mixed solvent of two or more thereof.

In a case where a specimen for microscopic observation is prepared using the cover film according to the embodiment of the present invention, xylene is often used as the above-described enclosing solvent. In the application for preparing the specimen for microscopic observation, since the specimen obtained by embedding in paraffin and cutting in vivo tissues and cells is often used as the sample, xylene is suitably used because it can remove the paraffin during enclosing and has good affinity with in vivo tissues and cells.

As the polymer, from the viewpoint of excellent solubility in the above-described organic solvent, a polymer (also referred to as "acrylic resin") containing at least one repeating unit derived from a monomer selected from the group consisting of an acrylate monomer and a methacrylate monomer (also referred to as "(meth)acrylate monomer") is preferable.

The above-described acrylic resin may be a homopolymer consisting of only one kind of repeating unit derived from the (meth)acrylate monomer, or may be a copolymer including at least one kind of repeating unit derived from the (meth)acrylate monomer.

The above-described copolymer may be a copolymer containing at least two or more repeating units derived from the (meth)acrylate monomer, or may be a copolymer containing at least one repeating unit derived from the (meth)acrylate monomer and a repeating unit derived from a monomer other than the (meth)acrylate monomer (for example, an acrylamide monomer such as dimethylacrylamide and isopropylacrylamide, and a vinyl monomer such as styrene).

Among these, the acrylic resin preferably contains at least two kinds of repeating units derived from the (meth)acrylate monomer, that is, at least two kinds of repeating units derived from a monomer selected from the group consisting of the acrylate monomer and the methacrylate monomer. In addition, it is also preferable that the acrylic resin consists of only the repeating unit derived from the (meth)acrylate monomer.

A content of the repeating unit derived from the (meth)acrylate monomer is preferably 50% by mass or more, more preferably 70% by mass or more, and still more preferably 90% by mass or more with respect to all repeating units of the polymer. The upper limit thereof is not particularly limited, and may be 100% by mass. The "content of the repeating unit derived from the (meth)acrylate monomer" means the total content of the repeating unit derived from the acrylate monomer and the repeating unit derived from the methacrylate monomer, which are contained in the polymer.

The acrylic resin can be synthesized by a known method, and for example, it can be synthesized by mixing the (meth)acrylate monomer with any monomer as necessary and polymerizing the mixture.

Examples of the (meth)acrylate monomer include alkyl acrylate and alkyl methacrylate.

An alkyl group in the alkyl acrylate and the alkyl methacrylate may be linear, branched, or cyclic, and is preferably linear or branched.

In addition, the above-described alkyl group may have a substituent. Examples of the above-described substituent include an aryl group and a hydroxy group, and an aryl group is preferable and a phenyl group is more preferable.

The number of carbon atoms in the alkyl group in the alkyl acrylate and the alkyl methacrylate, which may have a substituent, is preferably 1 to 15, more preferably 1 to 8, and still more preferably 1 to 5.

Some of methylene groups constituting the above-described alkyl group may be substituted with a divalent substituent. Examples of the above-described divalent substituent include -O- and -CO-.

Specific examples of the above-described acrylate monomer include methyl acrylate, ethyl acrylate, n-propyl acrylate, i-propyl acrylate, n-butyl acrylate, i-butyl acrylate, t-butyl acrylate, 2-ethylhexyl acrylate, cyclohexyl acrylate, lauryl acrylate, phenyl acrylate, benzyl acrylate, hydroxyethyl acrylate, and acetoacetoxyalkyl acrylate.

Among these, as the acrylate monomer, ethyl acrylate, n-butyl acrylate, or phenyl acrylate is preferable, and ethyl acrylate is more preferable.

Specific examples of the above-described methacrylate monomer include methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, cyclohexyl methacrylate, phenyl methacrylate, benzyl methacrylate, lauryl methacrylate, 2-methoxyethyl methacrylate, hydroxyethyl methacrylate, and 2-acetoacetoxyethyl methacrylate.

Among these, as the methacrylate monomer, methyl methacrylate, ethyl methacrylate, t-butyl methacrylate, i-butyl methacrylate, 2-methoxyethyl methacrylate, n-butyl methacrylate, or 2-ethylhexyl methacrylate is preferable; methyl methacrylate, t-butyl methacrylate, i-butyl methacrylate, 2-methoxyethyl methacrylate, n-butyl methacrylate, or 2-ethylhexyl methacrylate is more preferable; and methyl methacrylate or t-butyl methacrylate is still more preferable.

The polymer preferably contains a repeating unit derived from an alkyl methacrylate with an alkyl group having 3 or more carbon atoms, and more preferably contains a repeating unit derived from an alkyl methacrylate with an alkyl group having 3 or more carbon atoms and a repeating unit derived from methyl methacrylate.

The alkyl group in the above-described alkyl methacrylate with an alkyl group having 3 or more carbon atoms may be linear, branched, or cyclic, and is preferably branched. In addition, the number of carbon atoms in the above-described alkyl group is 3 or more, preferably 3 to 15, more preferably 3 to 8, and still more preferably 3 to 5.

In addition, it is also preferable that the polymer does not contain a repeating unit derived from ethyl methacrylate.

Examples of one suitable aspect of the polymer also include a polymer X containing a repeating unit derived from an alkyl acrylate and a repeating unit derived from an alkyl methacrylate.

As the repeating unit derived from an alkyl acrylate, contained in the polymer X, a repeating unit derived from an alkyl acrylate with an alkyl group having 1 to 7 carbon atoms (preferably having 1 to 5 carbon atoms and more preferably having 1 to 3 carbon atoms) is preferable, and a repeating unit derived from ethyl acrylate is more preferable from the viewpoint of more excellent breaking toughness value.

In the polymer X, the repeating unit derived from an alkyl acrylate may be used alone, or in combination of two or more kinds thereof.

In the polymer X, a content of the repeating unit derived from an alkyl acrylate is preferably 5% by mass or more, more preferably 10% by mass or more, and still more preferably 15% by mass or more with respect to all repeating units of the polymer X. The upper limit thereof is preferably 40% by mass or less, more preferably 30% by mass or less, and still more preferably 25% by mass or less.

In the polymer X, the repeating unit derived from an alkyl methacrylate may be used alone or in combination of two or more kinds thereof, and it is preferable that two or more kinds thereof are used in combination.

The polymer X preferably contains, as the repeating unit derived from an alkyl methacrylate, at least one repeating unit derived from a monomer selected from the group consisting of methyl methacrylate and an alkyl methacrylate with an alkyl group having 3 or more carbon atoms, and more preferably contains a repeating unit derived from methyl methacrylate and a repeating unit derived from an alkyl methacrylate with an alkyl group having 3 or more carbon atoms. A suitable aspect of the alkyl methacrylate with an alkyl group having 3 or more carbon atoms is as described above.

In addition, it is also preferable that the polymer X does not contain a repeating unit derived from ethyl methacrylate.

In the polymer X, a content of the repeating unit derived from an alkyl methacrylate is preferably 60% by mass or more, more preferably 70% by mass or more, and still more preferably more than 75% by mass with respect to all repeating units of the polymer X. The upper limit thereof is preferably 95% by mass or less, more preferably 90% by mass or less, and still more preferably 85% by mass or less.

Examples of one suitable aspect of the polymer X include a polymer Y which contains a repeating unit derived from ethyl acrylate and at least one repeating unit derived from a monomer selected from the group consisting of methyl methacrylate, ethyl methacrylate, t-butyl methacrylate, i-butyl methacrylate, 2-methoxyethyl methacrylate, n-butyl methacrylate, and 2-ethylhexyl methacrylate.

In the polymer Y, a content of the repeating unit derived from ethyl acrylate is preferably 5% by mass or more, more preferably 10% by mass or more, and still more preferably 15% by mass or more with respect to all repeating units of the polymer Y. The upper limit thereof is preferably 40% by mass or less, more preferably 30% by mass or less, and still more preferably 25% by mass or less.

Examples of one suitable aspect of the polymer X also include a polymer Z containing a repeating unit derived from ethyl acrylate and a repeating unit derived from an alkyl methacrylate with an alkyl group having 3 or more carbon atoms.

In the polymer Z, a content of the repeating unit derived from ethyl acrylate is preferably 5% by mass or more, more preferably 10% by mass or more, and still more preferably 15% by mass or more with respect to all repeating units of the polymer Z. The upper limit thereof is preferably 40% by mass or less, more preferably 30% by mass or less, and still more preferably 25% by mass or less.

The details and suitable aspect of the alkyl methacrylate with an alkyl group having 3 or more carbon atoms in the polymer Z are as described above.

In the polymer Z, a content of the repeating unit derived from an alkyl methacrylate with an alkyl group having 3 or more carbon atoms is preferably 10% to 50% by mass, more preferably 20% to 40% by mass, and still more preferably 25% to 35% by mass with respect to all repeating units of the polymer Z.

The polymer Z may contain a repeating unit other than the above-described repeating units, and preferably further contain a repeating unit derived from another alkyl methacrylate (for example, methyl methacrylate and ethyl methacrylate) different from the alkyl methacrylate with an alkyl group having 3 or more carbon atoms, and more preferably further contain a repeating unit derived from methyl methacrylate.

In the polymer Z, a content of the repeating unit derived from another alkyl methacrylate is preferably 20% to 80% by mass, more preferably 30% to 70% by mass, and still more preferably 40% to 55% by mass with respect to all repeating units of the polymer Z.

A weight-average molecular weight (Mw) of the polymer is preferably 10,000 to 500,000, more preferably 50,000 to 140,000, still more preferably 80,000 to 120,000, and particularly preferably 90,000 to 120,000.

Among these, a weight-average molecular weight of the polymer having a repeating unit derived from an alkyl methacrylate with an alkyl group having 3 or more carbon atoms is preferably 50,000 to 140,000 and more preferably 90,000 to 120,000.

A value of the polarity element δP of the Hansen solubility parameter of the polymer is not particularly limited as long as the value of the polarity element δP of the Hansen solubility parameter of the polymer layer satisfies the predetermined requirement, but is preferably 0.0 to 5.1 MPa^{1/2} and more preferably 1.0 to 4.5 MPa^{1/2}.

In order to calculate the polarity element δP of the Hansen solubility parameter of the polymer, a method of calculating the polarity element δP of the Hansen solubility parameter of the polymer layer, which will be described later, can be used.

The polymer may be used alone or in combination of two or more thereof. In a case where two or more kinds of the polymers are used in combination, it is preferable that the polymers are used at a ratio at which turbidity does not occur in the mixed dried film.

A content of the polymer in the polymer layer is not particularly limited, but is preferably 50% by mass or more, more preferably 85% by mass or more, and still more preferably 90% by mass or more with respect to the total mass of the polymer layer. The upper limit thereof may be 100% by mass.

### (Silane coupling agents)

The polymer layer may contain at least one selected from the group consisting of a silane coupling agent, a hydrolyzate of the silane coupling agent, and a hydrolysis condensate of the silane coupling agent (hereinafter, these are also collectively referred to as "silane coupling agents").

The hydrolyzate of the silane coupling agent is intended to be a compound generated by hydrolysis of a hydrolyzable group in the silane coupling agent; and may be a completely hydrolyzed product in which all hydrolyzable groups in the silane coupling agent are hydrolyzed, a partially hydrolyzed product in which a part of the hydrolyzable groups is decomposed, or a mixture thereof.

The hydrolysis condensate of the silane coupling agent is intended to be a compound generated by condensation of the hydrolyzate of the silane coupling agent; and may be a compound generated by the condensation of all hydrolyzed groups of the hydrolyzate, a compound generated by the condensation of only a part of the groups, or a mixture thereof.

In a case where the polymer layer contains the silane coupling agents, it is preferable that the cover film is stored in a roll shape from the viewpoint that blocking between the polymer layer and a back surface of the support (a surface opposite to the surface on which the polymer layer is formed in the support) can be suppressed and the storability over time can be improved.

The type of the silane coupling agent is not particularly limited, but a silane coupling agent which has two or more different reactive groups in the molecule, in which at least one of the reactive groups is a reactive group which is chemically bonded to an inorganic substance and at least one of the reactive groups is a reactive group which is chemically bonded to an organic material, is preferable.

Examples of the silane coupling agent include a silane coupling agent represented by the following general formula.

X-Si(R¹)₃

X represents a group having a reactive group. Examples of the reactive group include a vinyl group, an epoxy group, an amino group, a (meth)acryloyl group, and a mercapto group.

More specifically, X can be a group represented by R²-L-. R² represents a reactive group, and L represents a divalent linking group (preferably, an alkylene group which may include a heteroatom (for example, an oxygen atom)).

R¹ represents a hydrolyzable group. The hydrolyzable group is a group which is directly linked to a silicon atom (Si) and can cause a hydrolysis reaction and/or a condensation reaction. Examples of the hydrolyzable group include an alkoxy group, a halogen atom, an acyloxy group, an alkenyloxy group, and an isocyanate group.

Examples of the silane coupling agent include vinyltrichlorosilane, vinyltris(β-methoxyethoxy)silane, vinyltriethoxysilane, vinyl trimethoxysilane, γ-(methacryloxypropyl)trimethoxy silane, β-(3,4-epoxycyclohexyl)ethyltrimethoxysilane, γ-glycidoxypropyltrimethoxysilane, γ-glycidoxypropylmethyldiethoxysilane, N-β-(aminoethyl)-γ-aminopropyltrimethoxysilane, N-β-(aminoethyl)-γ-aminopropyl methyldimethoxysilane, γ-aminopropyl triethoxysilane, N-phenyl-γ-aminopropyltrimethoxysilane, γ-mercaptopropyl trimethoxysilane, and γ-chloropropyl trimethoxysilane. Among these, the polymer layer preferably contains at least one selected from the group consisting of γ-glycidoxypropyltrimethoxysilane, N-β-(aminoethyl)-γ-aminopropyltrimethoxysilane, and γ-aminopropyltriethoxysilane; more preferably contains at least one selected from the group consisting of γ-glycidoxypropyltrimethoxysilane and N-β-(aminoethyl)-γ-aminopropyltrimethoxysilane; and still more preferably contains γ-glycidoxypropyltrimethoxysilane.

The silane coupling agents may be used alone or in combination of two or more kinds thereof.

A content of the silane coupling agents in the polymer layer is preferably 0.1 mg/m² or more and more preferably 5 to 25 mg/m² with respect to the area of the polymer layer.

The silane coupling agents in the polymer layer may be homogeneously present in the entire polymer layer, or may be unevenly distributed on any surface of the polymer layer. In a case where the silane coupling agents are unevenly distributed on a surface of the polymer layer, the surface may be a surface of the polymer layer on a side facing the support or may be a surface of the polymer layer on a side opposite to the support.

### (Plasticizer)

The polymer layer of the present invention may contain a plasticizer.

In a case where the plasticizer is contained, compatibility with the solvent (xylene or the like) of the polymer layer is improved, a dissolution rate in a case where the polymer layer comes into contact with the solvent is improved, and brittleness of the polymer layer can be improved, which is preferable.

The type of the plasticizer is not particularly limited, but a plasticizer having high compatibility with the polymer to be used is preferable. For example, it is preferable that a Hansen solubility parameter distance between the plasticizer and the polymer is small.

Examples of the plasticizer include a phosphate, a carboxylic acid ester, and a glycol compound.

Examples of the phosphate include triphenyl phosphate, bisphenol A bis-(diphenyl phosphate), trimethyl phosphate, triethyl phosphate, and diphenyl-2-methacryloylethyl phosphate.

Examples of the carboxylic acid ester include adipic acid esters such as dioctyl adipate, dibutyl adipate, diisobutyl adipate, ADK CIZER LV-808 (manufactured by ADEKA Corporation), and POLYSIZER W-242, W-230-H, W-1020-EL, and W-1430-EL; phthalic acid esters such as diisononyl phthalate, bis(2-ethylhexyl) phthalate, and isodecyl phthalate; sebacic acid esters such as dioctyl sebacate; trimellitic acid esters such as tris(2-ethylhexyl) trimellitate, ADK CIZER C series (for example, C-8; manufactured by ADEKA Corporation), and MONOCIZER W-705 (manufactured by DIC Corporation); pyromellitic acid esters such as ADK CIZER UL-80 and UL-100 (manufactured by ADEKA Corporation); dipentaerythritol esters such as UL-8 (manufactured by ADEKA Corporation); carboxylic acid esters having an epoxy group such as MONOCIZER W-150 (manufactured by DIC Corporation); benzoic acid esters such as MONOCIZER PB-3A (manufactured by DIC Corporation); dibutyl maleate; and glycerin triacetate.

Examples of the glycol compound include polyethylene glycol, triethylene glycol bis(2-ethylhexanoate), and diethylene glycol dibenzoate.

As the plasticizer, deep eutectic solvents (DES) can also be suitably used. The deep eutectic solvent is a solvent containing a hydrogen bond acceptor compound and a hydrogen bond donor compound, and is a solvent in which an eutectic melting point is lowered and a melting point is significantly lowered by mixing the hydrogen bond acceptor compound and the hydrogen bond donor compound.

Examples of the hydrogen bond acceptor compound include a quaternary ammonium compound, a phosphorus compound, a metal salt, an amino acid, and a polyvalent carboxylic acid, and examples of the hydrogen bond donor compound include an alcohol compound, saccharides, a carboxylic acid, and an amine compound.

The deep eutectic solvent is described in, for example, paragraphs [0025] to [0048] of US2018/0194913A and JP2020-105336A, the descriptions of which are incorporated herein by reference.

The plasticizer may be used alone or in combination of two or more thereof.

From the viewpoint that the effect of the plasticizer can be further exhibited and generation of chips during cutting can be further suppressed, a content of the plasticizer is preferably 0.5% to 20% by mass, more preferably 1% to 15% by mass, and still more preferably 3% to 10% by mass with respect to the total mass of the polymer layer.

### (Thickener)

The polymer layer may contain a thickener.

The type of the thickener is not particularly limited, and examples thereof include polysaccharides, celluloses, acrylic, polyvinyl alcohol, and polymer compounds such as diols and terpenes, inorganic particles such as silica particles and titania particles, and organic particles consisting of polymers such as polymethyl methacrylate (PMMA); and celluloses or silica particles are preferable.

From the viewpoint of suppressing bleed out (migration) of a hydrophilic material from a member in contact with the polymer layer, it is preferable that a surface of the inorganic particles is treated to be hydrophobic.

Sizes of the inorganic particles and the organic particles are not particularly limited, but in a case where the sizes are excessively large, scattering is likely to occur and microscopic properties may be deteriorated, so that average secondary particle diameters of the inorganic particles and the organic particles (average particle diameter of aggregates of the inorganic particles and the organic particles) are preferably 1 µm or less. The lower limit value thereof is not particularly limited, and may be 1 nm or more. The average secondary particle diameters of the inorganic particles and the organic particles can be measured based on a dynamic light scattering method using a particle diameter measuring device ("nanoSAQLA" manufactured by Otsuka Electronics Co., Ltd.).

In addition, from the viewpoint of preventing the scattering, it is preferable that refractive indices of the inorganic particles and the organic particles are close to the refractive index of the polymer layer. More specifically, the refractive indices of the inorganic particles and the organic particles are preferably 1.40 to 1.60.

The thickener may be used alone or in combination of two or more thereof.

From the viewpoint that the effect of the thickener can be further exhibited and generation of chips during cutting can be further suppressed, a content of the thickener is preferably 0.5% to 20% by mass, more preferably 1% to 15% by mass, and still more preferably 3% to 10% by mass with respect to the total mass of the polymer layer.

### (Properties of polymer layer)

### -Polarity element δP of Hansen solubility parameter-

The polarity element δP of a Hansen solubility parameter of the polymer layer (hereinafter, also simply referred to as "polarity element δP") is 0.0 to 5.1 MPa^{1/2}. From the viewpoint that the effect of the present invention is more excellent, the polarity element δP of the polymer layer is more preferably 1.0 to 4.5 MPa^{1/2}.

In a case where the polarity element δP of the polymer layer is set to be in the above-described range, a difference between the polarity element δP of the glass substrate and the polarity element δP of the polymer layer is small, and the affinity between the glass substrate and the polymer layer is excellent. As a result, the effect of the present invention is excellent. Specifically, an absolute value of the difference between the polarity element δP of the polymer layer and the polarity element δP of the glass substrate is preferably 2.6 MPa^{1/2} or less and more preferably 2.0 MPa^{1/2} or less. The lower limit thereof is not particularly limited, and is 0 MPa^{1/2} or more.

As the above-described polarity element δP of the glass substrate, a value described in a known document can be used, and it is, for example, 2.5 MPa^{1/2} described in HP of pirika.com ("Hansen Solubility Parameters (HSP) Application Notes", https://pirika.com/ENG/HSP/E-Book/Chap10.html).

The Hansen solubility parameters (HSP) are obtained by dividing solubility of a substance into three components (dispersion element δD, polarity element δP, and hydrogen bond element δH), and representing the components in a three-dimensional space (Hansen space); and the polarity element δP indicates an effect of a dipole-dipole force. The dispersion element δD indicates an effect of a dispersive force, and the hydrogen bond element δH indicates an effect of a hydrogen bonding force. The details of the Hansen solubility parameters are described in Hansen Solubility Parameters: A User's Handbook (CRC Press, 2007) by Charles M. Hansen.

The Hansen solubility parameters of the polymer layer can be determined by the following Hansen sphere method.

The polymer layer is isolated from the support of the cover film. Next, 1 g of the isolated polymer layer is put into 100 g of a solvent with known Hansen solubility parameters, stirred for 24 hours, and then visually checked; and then it is determined to be dissolved in a case where undissolved substances are not present, and it is determined to be undissolved in a case where undissolved substances are present. The above-described solubility determination is carried out for a plurality of solvents. Coordinates of the above-described solvents are plotted on the Hansen space, and a sphere (Hansen sphere) including the plot of the solvent in which the polymer layer is dissolved and not including the solvent in which the polymer layer is not dissolved is obtained. The obtained central coordinates of the Hansen sphere are obtained as the Hansen solubility parameters (dispersion element δD, polarity element δP, and hydrogen bond element δH) of the polymer layer. The value of the polarity element δP is employed as the polarity element δP of the polymer layer. The above-described solubility is determined at 25°C.

For the calculation of the Hansen sphere, for example, Hansen Solubility Parameters in Practice (HSPiP) (version: 5.1.08) can be used.

The solvent with known Hansen solubility parameters in the Hansen sphere method is appropriately selected depending on the formulation of the polymer layer. The number of solvents for which the solubility is determined is not particularly limited as long as the polarity element δP can be determined, but is, for example, 20 or more, preferably 30 or more.

### -Dissolution rate in xylene-

The dissolution rate of the polymer layer in xylene is 0.01 to 0.25 g·m⁻²·s⁻¹. From the viewpoint that the effect of the present invention is more excellent, the dissolution rate of the polymer layer in xylene is preferably 0.05 to 0.20 g·m⁻²·s⁻¹.

The above-described dissolution rate (g·m⁻²·s⁻¹) of the polymer layer in xylene is measured by the following procedure.

A cover film including the support and the polymer layer containing the polymer is cut to have a predetermined size (24 mm in length × 120 mm in width) to obtain a sample for measurement, and the mass (mass before immersion) thereof is measured. The above-described sample for measurement is immersed in 1,200 mL of xylene placed in a container for a certain period of time. After the immersion, the cover film is gently taken out from the container, and the xylene is sufficiently dried. The mass after drying (mass after immersion) thereof is measured, and a difference between the mass before immersion and the mass after immersion is calculated. The dissolution rate (g·m⁻²·s⁻¹) is calculated by dividing the mass difference (g) by the area (m²) and the immersion time (s) of the sample for measurement.

The immersion time may be appropriately set such that the polymer layer is not completely dissolved, and it is preferably 30 to 300 seconds, and examples thereof include 60 seconds. The temperature and time in a case of drying the xylene may be appropriately set, and examples thereof include 60 minutes at 150°C.

### -Viscosity-

The viscosity of a xylene solution having a concentration of solid contents of 20% by mass, which is obtained by dissolving the polymer layer in xylene, at 25°C is 17 to 200 cP. From the viewpoint that the effect of the present invention is more excellent, the above-described viscosity is preferably 30 to 150 cP and more preferably 30 to 75 cP.

The above-described viscosity (cP) is measured by the following procedure.

The polymer layer is isolated from the cover film including the support and the polymer layer containing the polymer, and the mass of the obtained polymer layer is measured. The obtained polymer layer is dissolved in xylene to prepare a xylene solution having a concentration of solid contents of 20% by mass. That is, the xylene solution contains a predetermined amount of components constituting the polymer layer as solid contents.

The viscosity (cP) of the above-described xylene solution at a measurement temperature of 25°C is measured using an E-type viscometer (VISCOMETER RE-85L, manufactured by TOKI-SANGYO CO., LTD.).

### -Breaking elongation-

The breaking elongation of the polymer layer included in the cover film according to the embodiment of the present invention is 10% or more. From the viewpoint that the effect of the present invention is more excellent, the breaking elongation of the polymer layer is preferably 15% or more. The upper limit of the breaking elongation of the polymer layer is not particularly limited, but is often 100% or less and more often 50% or less.

The above-described breaking elongation (%) is measured by the following procedure.

The cover film is heated under a vacuum condition. The vacuum condition is preferably 75 mmHg or less. The heating conditions may be appropriately selected according to the formulation and properties of the polymer layer, but the heating temperature is preferably 50°C to 150°C, for example, 100°C. The heating time is preferably 1 to 24 hours, and is, for example, 4 hours.

Thereafter, the support and the polymer layer are separated from each other to obtain a film-like polymer layer. In this case, in a case where the support can be peeled off from the polymer layer, a film-like polymer layer obtained by peeling off the support from the polymer layer can be used. In a case where the support cannot be peeled off from the polymer layer, a film-like polymer layer may be remanufactured by a casting method or the like, using a polymer layer separated from the support by a method such as scraping.

Thereafter, the humidity is controlled for 24 hours under the conditions of 23°C and 50%. The film-like polymer layer after the humidity control is punched into a predetermined size (width: 10 mm, length: 50 mm, thickness: 20 µm) using a punching cutter or the like, thereby producing a sample for a tensile test.

A tensile test is performed to stretch the above-described sample for a tensile test in a length direction at a tensile rate of 2 mm·min⁻¹ under a condition of 23°C and 50 %RH, using TENSILON RTF-1310 manufactured by A&D Company, Limited, and the breaking elongation (%) is calculated from the obtained stress-strain curve.

The above-described measurement is carried out five times, and an arithmetic average value thereof is adopted as the breaking elongation (%) of the polymer layer.

The total content of the solvents contained in the film-like polymer layer for measuring the breaking elongation is preferably 0.2% by mass or less and more preferably 0.1% by mass or less with respect to the total mass of the polymer layer. The lower limit thereof is not particularly limited, and is preferably 0% by mass.

It is preferable that each condition of the heating under the above-described vacuum condition is selected such that the total content of the solvents contained in the film-like polymer layer after the heating satisfies the above-described suitable range.

The above-described total content of the solvents contained in the polymer layer can be specified, for example, by measuring the type of the solvents contained in the polymer layer and the content of each solvent using a known measuring method such as gas chromatography-mass spectrometry (GC/MS).

### -Thickness-

A thickness of the polymer layer is not particularly limited, but is preferably 1 to 100 µm, more preferably 5 to 40 µm, and still more preferably 5 to 30 µm.

### -Refractive index-

From the viewpoint of optics during observation with a microscope, a refractive index of the polymer layer is preferably 1.45 to 1.56 that is close to that of glass (refractive index: 1.52 to 1.56), more preferably 1.46 to 1.56, and still more preferably 1.47 to 1.56.

### [Other layers]

The cover film may include a layer other than the support and the polymer layer.

Examples of other layers include a backing layer.

In order to prevent scratches on the surface of the cover film, to prevent blocking more reliably during storage in an extremely high temperature environment, or to obtain a curling balance of the cover film, the backing layer may be provided on the back surface of the support (surface on a side opposite to the surface on which the polymer layer is provided).

Examples of a constituent material of the backing layer include a synthetic polymer having a high glass transition temperature, such as polystyrene and polymethyl methacrylate, and gelatin.

A total film thickness of the polymer layer and the support in the cover film is not particularly limited, but is preferably 250 µm or less, more preferably 200 µm or less, and still more preferably 150 µm or less from the viewpoint of operability and microscopic properties during observation with a microscope. From the viewpoint of handleability such as breakage resistance and sealing property, the lower limit thereof is preferably 50 µm or more.

### <Manufacturing method of cover film>

A manufacturing method of the cover film is not particularly limited as long as it is a method of manufacturing a laminate including at least the support and the polymer layer, and it is preferable that the polymer layer is provided on the surface of the support.

A method of providing the polymer layer on the support is not particularly limited, and examples thereof include coating with a coater or a spray, casting, and transfer. Among these, it is preferable that a coating liquid obtained by dissolving the constituent components of the polymer layer in a solvent is applied onto the support, and then the coating film is dried to form the polymer layer.

The type of the solvent used in the coating liquid can be appropriately selected from the viewpoint of solubility of the constituent components of the polymer layer, wettability such that no cissing occurs on the support, drying rate, surface tension, and the like. Examples of the solvent used in the coating liquid include toluene, ethyl acetate, butyl acetate, acetone, methyl ethyl ketone, and xylene.

In a case where a material which can dissolve the surface of the support or a material which can elute a low-molecular-weight component contained in the support, such as the plasticizer, is used as the solvent used in the coating liquid, interface mixing between the constituent components of the polymer layer and the support is promoted, the adhesiveness between the polymer layer and the support is improved, the peeling of the polymer layer can be prevented, and the generation of chips during cutting can be suppressed.

From the above-described viewpoint, it is preferable that the coating liquid used for forming the polymer layer contains a solvent selected from the group consisting of ethyl acetate and butyl acetate, and it is more preferable to contain ethyl acetate.

A content of the solvent selected from the group consisting of ethyl acetate and butyl acetate in the coating liquid is not particularly limited, but from the viewpoint that the formation of chips during cutting of the cover film can be further suppressed, it is preferably 40% by mass or more, and more preferably 50% by mass or more with respect to the total mass of solvents contained in the coating liquid. The upper limit thereof is not particularly limited and may be 100% by mass or less, and from the viewpoint of further suppressing deformation of the substrate, it is preferably 90% by mass or less.

After applying the above-described coating liquid onto the support to form a coating film, it is preferable to perform a drying step of drying the coating film to remove the solvent from the coating film.

Examples of the drying treatment in the drying step include a method (for example, natural drying) of leaving the coating film to stand at room temperature (23°C) for a predetermined time, blast drying of blasting gas to the coating film, heating drying of heating the coating film using a heating unit such as an oven, a heating plate, and a heating roll, and a combination thereof. In the drying step, it is preferable to perform at least one of the blast drying or the heating drying, and it is more preferable to perform a combination of the blast drying and the heating drying.

A temperature of the gas used in the blast drying is not particularly limited, and is preferably 50°C to 160°C and more preferably 80°C to 140°C. A speed (wind speed) of air flow in the blast drying is not particularly limited, but is preferably 2 to 15 m/s and more preferably 3 to 10 m/s. A treatment time of the blast drying is preferably 0.5 to 5 minutes. Examples of the gas used in the blast drying include air and nitrogen.

A temperature of the heating drying is not particularly limited, but is preferably 50°C to 160°C. In addition, a heating time is preferably 0.5 to 5 minutes.

A method of forming the polymer layer containing the silane coupling agents is not particularly limited, and examples thereof include a first method of adding the silane coupling agents to a coating liquid for forming a polymer layer, applying the coating liquid containing the polymer and the silane coupling agents onto the support, and drying the coating film to form the polymer layer; a second method of applying a coating liquid obtained by dissolving the silane coupling agents in a solvent onto the surface of the coating film or the polymer layer containing the polymer, formed on the support, and drying the coating film to form a polymer layer; and a third method of simultaneously applying (multilayer application) a coating liquid containing the polymer and a coating liquid obtained by dissolving the silane coupling agents in a solvent onto the transparent support, and drying the coating film to form a polymer layer.

In the above-described first method to third method, in a case where a silane coupling agent is used as a raw material, a hydrolysis reaction and a condensation reaction of the silane coupling agent may proceed during the formation.

From the viewpoint that the silane coupling agents can be effectively utilized with a small amount, the above-described second method or third method is preferable. In the polymer layer containing the silane coupling agents, formed by the above-described second method and the above-described third method, the silane coupling agents are likely to be unevenly distributed on the surface of the polymer layer on a side opposite to the support.

The solvent of the coating liquid obtained by dissolving the silane coupling agents in the solvent used in the above-described second method and third method is not particularly limited as long as the silane coupling agent can be dissolved, and examples thereof include the solvents exemplified as the solvent capable of dissolving the above-described polymer. Among those, from the viewpoint of further improving the adhesiveness, ethyl acetate is preferable.

### <Applications>

The cover film according to the embodiment of the present invention can be preferably used as a cover film used for covering a sample on a substrate. Among these, the cover film can be more preferably used for preparing the specimen for microscopic observation, and can be still more preferably applied to a microscope having an automatic enclosing device. The above-described substrate is preferably a glass substrate.

The applications of the cover film according to the embodiment of the present invention are not limited to the above-described applications, and for example, the cover film can be used for applications such as sealing of a thin film on the glass substrate and protection of an underlayer by lamination.

### Examples

Hereinafter, the present invention will be described in more detail based on Examples.

The materials, the amounts of materials used, the proportions, the treatment details, the treatment procedure, and the like shown in Examples below may be modified as appropriate as long as the modifications do not depart from the spirit of the present invention. Therefore, the scope of the present invention should not be construed as being limited to Examples shown below.

### <Production of cover film>

### [Production of polymer layer]

A support 1 was produced according to the following procedure.

### (Preparation of core layer cellulose acylate dope)

The following components were put into a mixing tank and the mixture was stirred to dissolve each component, thereby preparing a cellulose acetate solution A1 used as a core layer cellulose acylate dope.
· Cellulose acetate having acetyl substitution degree of 2.88 100 parts by mass
· Mixture containing an oligomer A-1 described later and the following compound A-2, in which a mass ratio of a content of the oligomer A-1 and a content of the compound A-2 {(content of oligomer A-1):(content of compound A-2)} was 4:1

| | |
|---|---|
| · Methylene chloride | 430 parts by mass |
| · Methanol | 64 parts by mass |

An addition amount of the above-described mixture contained in the cellulose acetate solution A1 was adjusted such that the total content of the oligomer A-1 and the compound A-2 contained in the support 1 produced by the following method, using the cellulose acetate solution A1 and a cellulose acetate solution A2 described later, was 12.3% by mass with respect to the total mass of the support 1.

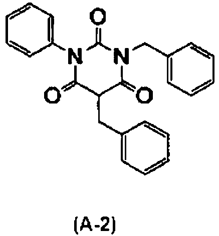

The oligomer A-1 was an aliphatic carboxylic acid ester oligomer which is a condensate of 1,2-cyclohexyldicarboxylic acid and ethylene glycol, and has a terminal structure in which hydrogen atoms of hydroxy groups at both terminals are substituted (sealed) with a cyclohexanoyl group. A number-average molecular weight of the oligomer A-1 was 850.

### (Preparation of outer layer cellulose acylate dope)

10 parts by mass of a matte agent solution B1 having the following formulation was added to 90 parts by mass of the above-described cellulose acetate solution A1 (core layer cellulose acylate dope) to prepare a cellulose acetate solution A2 to be used as an outer layer cellulose acylate dope.

### -Formulation of matting agent solution-

| | |
|---|---|
| · Silica particles having an average particle diameter of 2020 nm (AEROSIL R972,manufactured by Nippon Aerosil Co., Ltd.) | 2 parts by mass |
| · Methylene chloride | 76 parts by mass |
| · Methanol | 11 parts by mass |
| · Cellulose acetate solution A1 (core layer cellulose acylate dope) | 1 part by mass |

### (Production of support 1)

The above-described core layer cellulose acylate dope and the above-described outer layer cellulose acylate dope were filtered through a filter paper having an average hole diameter of 34 µm and a sintered metal filter having an average hole diameter of 10 µm. The filtered core layer cellulose acylate dope and the filtered outer layer cellulose acylate dope were simultaneously cast in three layers from a casting port of a band casting machine onto a drum surface having a surface temperature of 20°C to form a laminated film in which the core layer was sandwiched between two outer layers.

Subsequently, the laminated film was peeled off from the drum, and both ends of the laminated film in the width direction were fixed with a tenter clip. The laminated film fixed with the tenter clip was dried while being stretched in the width direction at a stretching ratio of 1.1 times. Thereafter, the laminated film was transported between rolls of a heat treatment device to be further dried, thereby producing a support 1.

The lowest pKa among the pKa of the hydrolyzate contained in the support 1 was 4.0 as the pKa of at least one of the hydrolyzates of the above-described compound A-2. Therefore, the support 1 did not contain the specific ester compound.

The support 1 was a transparent support, and had an in-plane retardation Re of < 200 nm at a wavelength of 590 nm and a thickness-direction retardation Rth of -50 to 50 nm at a wavelength of 590 nm.

### [Production of polymer layer]

### (Synthesis of polymer)

A polymer 1 was synthesized by the following procedure.

At 80°C in a nitrogen atmosphere, a mixed solution of 20 parts by mass of ethyl acrylate, 50 parts by mass of methyl methacrylate, 30 parts by mass of t-butyl methacrylate, 98 parts by mass of toluene, 66 parts by mass of ethyl acetate, and 0.7 parts by mass of azoisobutyronitrile was added to a mixture of 38 parts by mass of toluene and 25 parts by mass of ethyl acetate over 2 hours. Thereafter, the obtained mixed solution was reacted for 2 hours while maintaining the temperature at 80°C. Thereafter, 1.2 parts by mass of azoisobutyronitrile was added to the above-described mixed solution, and the mixture was subjected to a polymerization reaction at 90°C to produce a polymer having a predetermined weight-average molecular weight of the polymer 1, thereby obtaining a polymer solution 1. The weight-average molecular weight (Mw) of the obtained polymer was 100,000.

Polymers used in each of Examples and Comparative Examples are as shown in the table shown in the latter part. The ratio of each monomer was a mass ratio, and each polymer was synthesized by using the monomer according to the above-described procedure so as to be the ratio.

### (Preparation of coating liquid for forming polymer layer)

Ethyl acetate and toluene were added to the polymer solution 1 such that a concentration of solid contents of the polymer was 20% by mass and a ratio of the ethyl acetate to all solvents was 78% by mass, and the mixture was stirred to obtain a polymer layer coating liquid 1.

A polymer solution used in each of Examples and Comparative Examples was prepared according to the above-described procedure.

Furthermore, 109.89 parts by mass of ethyl acetate was added to 0.11 parts by mass of a silane coupling agent KBM403 (γ-glycidoxypropyltrimethoxysilane, manufactured by Shin-Etsu Chemical Co., Ltd.) to obtain a silane coupling agent coating liquid 1.

### [Formation of polymer layer]

The support 1 was coated with the polymer layer coating liquid 1 and the silane coupling agent coating liquid 1 by an extrusion multilayer coating method to form a coating film. The coating amount of the polymer layer coating liquid 1 was adjusted to an amount such that a film thickness after drying was 19 µm; and the coating amount of the silane coupling agent coating liquid 1 was adjusted to an amount such that a coating concentration of the silane coupling agent with respect to the area of the surface of the transparent support was 13.5 mg/m².

As a drying step, a blowing and drying treatment of blowing hot air at 100°C and a wind speed of 3.2 m/s for 2 minutes was performed on the formed coating film, and then a heating and drying treatment was performed using an oven to volatilize the solvent, thereby producing a cover film 1 consisting of the transparent support and the polymer layer having a silane coupling agent layer on the surface side. The total film thickness of the transparent support and the polymer layer in the cover film 1 was 137 µm.

Each cover film used in each of Examples and Comparative Examples was produced according to the above-described procedure.

### <Measurement of physical properties of polymer layer>

Physical properties of the polymer layer in each cover film obtained by the above-described method were measured by the following methods.

### [Polarity element δP of Hansen solubility parameter of polymer layer]

The polarity element δP of the polymer layer was determined using the Hansen sphere method described above.

Specifically, 1 g of the polymer layer obtained by being peeled off from the support 1 was put into 100 g of a solvent with known Hansen solubility parameters, which was adjusted to 25°C, and stirred for 24 hours, and then visually checked. Solubility at 25°C was determined to be dissolved in a case where undissolved substances were not present, and it is determined to be undissolved in a case where undissolved substances were present. The solubility was determined in 30 types of solvents. A sphere (Hansen sphere) including a plot of the solvent in which the polymer layer was dissolved and not including a plot of the solvent in which the polymer layer was not dissolved was obtained by plotting the coordinates of the solvent on the Hansen space using HSPiP. The obtained central coordinates of the Hansen sphere were used as Hansen solubility parameters (dispersion element δD, polarity element δP, and hydrogen bond element δH) of the polymer layer, and the value of the polarity element δP was adopted as the polarity element δP of the polymer layer.

### [Dissolution rate of polymer layer in xylene]

The cover film was cut into a size of 24 mm in length × 120 mm in width, and the cut cover film was immersed in 1,200 mL of xylene in a stainless steel container for 60 seconds. The mass of the cover film before and after the immersion was measured, and the mass change amount (g) before and after the immersion was divided by the area (m²) of the cover film and the immersion time (s) to calculate the dissolution rate (g·m⁻²·s⁻¹). The xylene after the immersion was dried at 150°C for 60 minutes.

### [Viscosity of polymer layer]

The polymer layer was dissolved in xylene to produce a xylene solution having a concentration of solid contents of 20%. The viscosity (cP) of the xylene solution of the polymer layer at 25°C was measured using an E-type viscometer (VISCOMETER RE-85L, manufactured by TOKI-SANGYO CO., LTD.).

### [Breaking elongation of polymer layer]

The cover film was heated at 100°C for 4 hours under a vacuum condition, and then the support 1 was peeled off from the polymer layer to obtain a film-like polymer layer. The obtained film-like polymer layer was conditioned for 24 hours under the conditions of 23°C and 50 %RH, and then punched with a punching cutter to have a width of 10 mm and a length of 50 mm, thereby producing a sample for a tensile test.

A tensile test was performed at a tensile rate of 2 mm/min under a condition of 23°C and 50 %RH, using TENSILON RTF-1310 manufactured by A&D Company, Limited, and the breaking elongation (%) was obtained from the obtained stress-strain curve. An average value measured five times was defined as the breaking elongation (%) of the polymer layer.

### <Evaluation>

### [Adhesiveness after long-term storage]

A glass substrate (slide glass) and the cover film were bonded to each other using an automatic enclosing device Tissue-Tek Film (manufactured by Sakura Finetek Japan Co., Ltd.) to perform an enclosing treatment, thereby obtaining an enclosed body. Xylene was used as an enclosing solvent. The size of the glass slide was 26 mm × 76 mm, and the size of the cover film was 24 mm × 50 mm.

The above-described enclosed body was stored at 50°C and 80 %RH for 10 days, and then the peeling of the cover film of the enclosed body was visually observed. The above-described test was carried out on 10 slides of the enclosing bodies, and the adhesiveness after long-term storage was evaluated according to the following classification based on the number of enclosing bodies in which peeling occurred. An evaluation of B or higher is preferable in terms of practical use.
· A: the number of enclosing bodies in which peeling occurred was 0 out of 10 slides.
· B: the number of enclosing bodies in which peeling occurred was 1 out of 10 slides.
· C: the number of enclosing bodies in which peeling occurred was 2 or more out of 10 slides.

### <Result>

Table 1 shows the configuration of the cover film used in each of Examples and Comparative Examples, and the measurement results and the evaluation results.

In Table 1, the notation of "Nk" in the weight-average molecular weight indicates N × 1000, and for example, "100k" represents 100,000.

In Table 1, the numerical values in the column of polymer formulation indicate parts by mass of the repeating unit derived from each monomer with respect to all repeating units of the polymer.

**[Table 1]**

| | | Example 1 | Example 2 | Example 3 | Example 4 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Polymer formulation | Ethyl acrylate | 20 | 25 | 20 | 20 | 20 | | 20 | 100 | | 31 |
| | Methyl methacrylate | 50 | 50 | 50 | 50 | 50 | 50 | 60 | | | 69 |
| | Cyclohexyl methacrylate | | | | | 30 | | | | | |
| | n-Butyl methacrylate | | | | | | 50 | 20 | | | |
| | Ethyl methacrylate | | 25 | | | | | | | | |
| | 2-Ethylhexyl methacrylate | | | | | | | | | 100 | |
| | t-Butyl methacrylate | 30 | | 30 | 30 | | | | | | |
| | Weight-average molecular weight | 100k | 100k | 85k | 130k | 100k | 100k | 100k | 100k | 100k | 100k |
| Physical properties of polymer layer | δP [MPa^{1/2}] | 4.3 | 4.9 | 4.3 | 4.3 | 4.4 | 3.9 | 4.7 | 6.2 | 2.0 | 5.2 |
| | Dissolution rate in xylene [g/(m²·s)] | 0.11 | 0.19 | 0.11 | 0.11 | 0.21 | 0.1 | 0.002 | 0.02 | 0.3 | 0.14 |
| | Viscosity [cP] | 33 | 100 | 20 | 150 | 30 | 300 | 150 | 15 | 180 | 150 |
| | Breaking elongation [%] | 15% | 20% | 11% | 20% | 5% | 11% | 15% | 100% | 20% | 20% |
| Adhesiveness after long-term storage | Number of peeled slides | 0 | 1 | 1 | 1 | 3 | 3 | 5 | 2 | 4 | 3 |
| | Determination | A | B | B | B | C | C | C | C | C | C |

From the results in Table 1, it was found that the cover film according to the embodiment of the present invention had excellent adhesiveness to the glass substrate after long-term storage of the enclosed body obtained by bonding the glass substrate to the cover film using the enclosing solvent, as compared with the cover films of Comparative Examples 1 to 6, which did not satisfy at least one of the requirements that the polarity element δP of the Hansen solubility parameter of the polymer layer was 0.0 to 5.1 MPa^{1/2}, that the dissolution rate of the polymer layer in xylene was 0.01 to 0.25 g·m⁻²·s⁻¹, that the viscosity of the xylene solution having a concentration of solid contents of 20% by mass, which was obtained by dissolving the polymer layer in xylene, at 25°C was 17 to 200 cP, and that the breaking elongation of the polymer layer was 10% or more.

From the comparison of Examples 1 and 2, it was found that the effect of the present invention was more excellent in a case where the polarity element δP of the polymer layer was 4.5 MPa^{1/2} or less.

From the comparison of Examples 1, 3, and 4, it was found that the effect of the present invention was more excellent in a case where the weight-average molecular weight of the polymer was 90,000 to 120,000.

From the comparison of Examples 1 to 4, it was found that the effect of the present invention was more excellent in a case where the viscosity of the xylene solution having a concentration of solid contents of 20% by mass, which was obtained by dissolving the polymer layer in xylene, at 25°C was 30 to 75 cP.

## Claims

1. A cover film comprising:
a support; and
a polymer layer containing a polymer,
wherein a polarity element δP of a Hansen solubility parameter of the polymer layer is 0.0 to 5.1 MPa^{1/2},
a dissolution rate of the polymer layer in xylene is 0.01 to 0.25 g·m⁻²·s⁻¹,
a viscosity of a xylene solution having a concentration of solid contents of 20% by mass, which is obtained by dissolving the polymer layer in xylene, at 25°C is 17 to 200 cP, and
a breaking elongation of the polymer layer is 10% or more.

2. The cover film according to claim 1,
wherein a weight-average molecular weight of the polymer is 50,000 to 140,000.

3. The cover film according to claim 1,
wherein the polymer contains at least two repeating units derived from a monomer selected from the group consisting of an acrylate monomer and a methacrylate monomer.

4. The cover film according to claim 1,
wherein the polymer contains a repeating unit derived from ethyl acrylate and at least one repeating unit derived from a monomer selected from the group consisting of methyl methacrylate, ethyl methacrylate, t-butyl methacrylate, i-butyl methacrylate, 2-methoxyethyl methacrylate, n-butyl methacrylate, and 2-ethylhexyl methacrylate, and
a content of the repeating unit derived from ethyl acrylate is less than 25% by mass with respect to all repeating units of the polymer.

5. The cover film according to claim 1,
wherein the polymer contains a repeating unit derived from an alkyl methacrylate with an alkyl group having 3 or more carbon atoms.

6. The cover film according to claim 1,
wherein a thickness of the polymer layer is 5 to 30 µm.

7. The cover film according to claim 1,
wherein a weight-average molecular weight of the polymer is 90,000 to 120,000.

8. The cover film according to claim 1,
wherein the polymer layer further contains at least one compound selected from the group consisting of a silane coupling agent, a hydrolyzate of the silane coupling agent, and a hydrolysis condensate of the silane coupling agent.

9. The cover film according to any one of claims 1 to 8,
wherein the cover film is used for covering a sample on a substrate.
